# EUROPEAN PATENT SPECIFICATION

(11) **EP 1 010 955 B1**
(45) Date of publication and mention of the grant of the patent: **31.03.2004**
(21) Application number: 99203076.7
(22) Date of filing: 20.09.1999
(51) Int. Cl.: F25B 39/02, F25D 11/00, F25D 16/00, F25D 3/00, F28D 20/00

(54) **An evaporator for a refrigerator or the like**
Verdampfer für einen Kühlschrank oder dergleichen
Evaporateur pour un réfrigérateur ou similaire

(30) Priority: 18.12.1998 IT MI982744
(43) Date of publication of application: 21.06.2000
(73) Proprietor: Brandt Italia S.p.A., Brescia (IT)
(72) Inventor: Nocivelli, Gianfranco, 25028 Verolanuova (Brescia) (IT)
(74) Representative: Siniscalco, Fabio

(56) References cited:
- EP-A- 0 843 138
- EP-A- 0 851 191
- EP-A- 0 866 289
- CH-A- 411 005
- DE-A- 3 222 346
- US-A- 2 073 123
- US-A- 2 589 550
- US-A- 2 745 256

## Description

The present invention relates to an evaporator for a refrigerator, of the type comprising a plate-shaped element of predetermined height and a coil spread out on the plate-shaped element as defined in the preamble of claim 1. Such an evaporator is known for instance from EP-A-0 843 138.

As is known, by virtue of the presence of the evaporator, the temperature prevailing in the compartment of the refrigerator which is intended to contain food is low enough to preserve the food.

Although known evaporators of the type specified are satisfactory from various points of view and are widely used, they have a disadvantage which, up to now, has not been overcome. In fact, a non-uniform temperature distribution has been found within the food compartment and, in particular, lower temperatures in the bottom of compartment and higher temperatures in the top of the compartment.

The problem upon which the present invention is based is that of devising an evaporator of the type specified which has structural and functional characteristics such as to overcome the above-mentioned disadvantage.

This problem is solved by an evaporator of the type specified which is characterized in that it comprises a heat-capacity means distributed non-uniformly on the plate-shaped element as defined in claim 1.

Further characteristics and the advantages of the evaporator according to the present invention will become clear from the following description of an embodiment thereof, given by way of non-limiting example with reference to the appended drawings, in which:
Figure 1 is a partially-sectioned, perspective view of a refrigerator incorporating an evaporator according to the invention,
Figure 2 is a partially-sectioned, perspective view of a refrigerator incorporating an evaporator according a variant of the invention,
Figure 3 is a partially-sectioned, perspective view of a refrigerator incorporating an evaporator according to a further variant of the invention.

With reference to the appended drawings, these show an evaporator, generally indicated 1, for a refrigerator 2 which, in the embodiment shown, is a domestic refrigerator of which only a food compartment 3 having a rear wall 4 is shown.

The evaporator 1 comprises a plate-shaped element 5 having a width L and a height H which are slightly less than the width and the height of the rear wall 4, respectively. The plate-shaped element 5 is fixed in the compartment 3 close to the rear wall 4.

The evaporator 1 comprises a coil 6 for a refrigerant fluid distributed uniformly over the entire surface of the plate-shaped element 5, and has a heat-capacity means 7 which, however, is distributed non-uniformly over the plate-shaped element 5 and, in particular is distributed in the region of an upper portion of the plate-shaped element 5.

In particular, the heat-capacity means 7 comprises a chamber 8 for a substance having a predetermined, high heat capacity, for example, a mixture of water and alcohol, the chamber 8 extending for approximately the upper half of the height H of the plate-shaped element 5.

The plate-shaped element 5 of the evaporator 1 is in the form of a steel sheet 9 having a face 10 facing towards the rear wall 4. The coil 6, which is constituted by a steel tube and forms a plurality of loops, is welded to the face 10. The chamber 8 is delimited by the steel sheet 9 and by a steel sheet 11 edged with rims 12 and welded to the face 10 of the sheet 9 along the rims 12, the rims 12 overlapping the tube of the coil 6 where necessary.

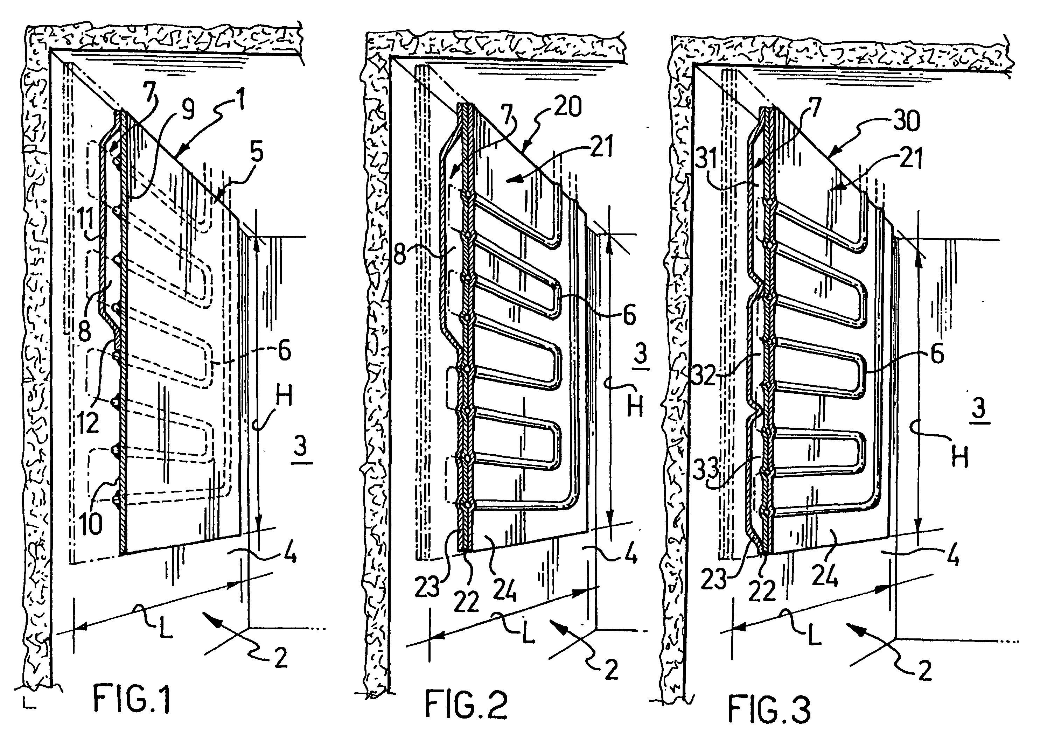

A evaporator 20 according to a variant of the invention will be described below and is shown in Figure 2, in which parts structurally and functionally identical to the parts of the evaporator of Figure 1 retain the same reference numerals and are not described further below.

In the evaporator 20, a plate-shaped element 21 comprises three thin aluminium layers 22, 23 and 24, that is, an inner layer 22 and two outer layers 23 and 24, the layer 23 facing towards the rear wall 4 and the outer layer 24 facing in the opposite direction. The layers 22, 23 and 24 are welded together by rolling. A coil 6 is formed by expansion between the layers 23 and 24, and a chamber 8 is formed by expansion between the layers 23 and 22. The chamber 8 extends for a height approximately equal to the upper half of the height H of the plate-shaped element 21.

An evaporator 30 according to a variant of the invention is described below and is shown in Figure 3, in which parts structurally and functionally identical to the parts of the evaporators of Figure 1 and of Figure 2 retain the same reference numerals and are not described below.

The evaporator 30 comprises a heat-capacity means 7 which is in the form of a first chamber 31, a second chamber 32 and a third chamber 33. The three chambers 31, 32, 33 do not communicate with one another and each occupies approximately one third of the height H of the plate-shaped element 21. The upper chamber 31 contains a liquid with a high heat capacity, for example, a mixture of water and alcohol with a low concentration of alcohol; the second, or intermediate chamber 32 contains a liquid having a heat capacity lower than the heat capacity of the liquid of the chamber 31, for example, a mixture of water and alcohol with a high concentration of alcohol. Finally, the third, or lower chamber 33 contains a liquid having a heat capacity even lower than the heat capacities of the liquids of the previous chambers and, in particular, contains only alcohol.

In operation, it has been found that an excellent uniformity of temperature is established in the compartment of the refrigerator in the direction of its height, by virtue of the non-uniform distribution of the heat capacity. This can be explained by the fact that, in the refrigerator, when the compressor is operating, the entire surface of the evaporator cools the air which passes over it in the cell, whereas, when the compressor is not operating, only the upper portion of the evaporator which has the greatest heat capacity continues to give up coldness.

The main advantage of the evaporator according to the present invention is that it achieves excellent operation of the refrigerator and, in particular, excellent uniformity of the temperature in the compartment.

A further important advantage of the evaporator according to the present invention, is that it improves the energy efficiency of the refrigerator in operation and enables the evaporation temperature in the evaporator to be less low.

This is accompanied by the further advantage of greater humidity of the air in the compartment and less drying of the food contained therein.

Naturally, in order to satisfy contingent and specific requirements, an expert in the art may apply to the evaporator as described above with reference to the drawings, many modifications and variations, all of which, however, fall within the scope of protection of the invention as defined by the following claims.

## Claims

1. An evaporator (1, 20, 30) for a refrigerator (2), of the type comprising a plate-shaped element (5) of a predetermined height (H) and a coil (6) for a refrigerant fluid distributed uniformly over the entire surface of said plate-shaped element (5), **characterized in that** it comprises a heat-capacity means (7) distributed at least in the region of an upper portion of said plate-shaped element (5) so that said region provides a heat-capacity higher than the heat-capacity of the rest portion of said plate-shaped element (5).

2. An evaporator (1, 20, 30) according to Claim 1, **characterized in that** the heat-capacity means (7) comprises a chamber (8, 31) for a substance having a predetermined, high heat capacity, the extent of the chamber being limited to an upper portion of the plate-shaped element (5).

3. An evaporator (1, 20) according to Claim 2, **characterized in that** the chamber (8) extends over approximately the upper half of the height.

4. An evaporator (30) according to Claim 2, **characterized in that** it comprises a second chamber (32) for a substance having a lower heat capacity than the substance of the first chamber (31), the second chamber (32) extending over an intermediate portion of the plate-shaped element.

5. An evaporator (30) according to Claim 4, **characterized in that** each of the first chamber (31) and the second chamber (32) extends over approximately one third of the height, that is, an upper third and an intermediate third of the height, respectively.

6. An evaporator (30) according to Claim 4, **characterized in that** it comprises a third chamber (33) for a substance having a lower heat capacity than the substances of the first chamber (31) and of the second chamber (32), the third chamber (33) extending below the second chamber (32).

7. An evaporator (30) according to Claim 6, **characterized in that** the third chamber (33) extends over approximately the lower third of the height.

8. An evaporator (1, 20, 30) according to any one of Claims 1 to 7, **characterized in that** the chamber (8) is formed between a first flat steel sheet (9) and a second, rimmed steel sheet (11) fixed to the first sheet (9).

9. An evaporator (1, 20, 30) according to any one of Claims 1 to 7, **characterized in that** the plate-shaped element (5) comprises three aluminium layers (22, 23, 24), an inner layer (22) and two outer layers (23, 24), welded together by rolling, and **in that** the coil (6) is formed by expansion between the inner layer (22) and an outer layer (24), and the chamber (8, 31, 32, 33) is formed by expansion between the inner layer (22) and the other outer layer (23).

## Patentansprüche

1. Verdampfer (1, 20, 30) für einen Kühlschrank (2) des Typs, der ein plattenförmiges Element (5) einer vorgegebenen Höhe (H) und eine Rohrschlange (6) für ein Kältemittelfluid umfasst, die gleichmäßig über die gesamte Oberfläche des plattenförmigen Elementes (5) verteilt ist, **dadurch gekennzeichnet, dass** er eine Wärmekapazitätseinrichtung (7) umfasst, die wenigstens in dem Bereich eines oberen Abschnitts des plattenförmiges Elementes (5) so verteilt ist, so dass der Bereich eine Wärmekapazität hat, die größer ist als die Wärmekapazität des restlichen Abschnitts des plattenförmigen Elementes (5).

2. Verdampfer (1, 20, 30) nach Anspruch 1, **dadurch gekennzeichnet, dass** die Wärmekapazitätseinrichtung (7) eine Kammer (8, 31) für eine Substanz mit einer vorgegebenen hohen Wärmekapazität umfasst, wobei die Ausdehnung der Kammer auf einen oberen Abschnitt des plattenförmigen Elementes (5) begrenzt ist.

3. Verdampfer (1, 20) nach Anspruch 2, **dadurch gekennzeichnet, dass** sich die Kammer (8) etwa über die obere Hälfte der Höhe erstreckt.

4. Verdampfer (30) nach Anspruch 2, **dadurch gekennzeichnet, dass** er eine zweite Kammer (32) für eine Substanz mit einer geringeren Wärmekapazität als der der Substanz der ersten Kammer (31) umfasst, wobei sich die zweite Kammer (32) über einen Mittelabschnitt des plattenförmigen Elementes erstreckt.

5. Verdampfer (30) nach Anspruch 4, **dadurch gekennzeichnet, dass** sich die erste Kammer (31) und die zweite Kammer (32) jeweils über etwa ein Drittel der Höhe erstrecken, d.h. ein oberes Drittel bzw. ein mittleres Drittel der Höhe.

6. Verdampfer (30) nach Anspruch 4, **dadurch gekennzeichnet, dass** er eine dritte Kammer (33) für eine Substanz mit einer geringeren Wärmekapazität als der der Substanzen der ersten Kammer (31) und der zweiten Kammer (32) umfasst, wobei sich die dritte Kammer (33) unterhalb der zweiten Kammer (32) erstreckt.

7. Verdampfer (30) nach Anspruch 6, **dadurch gekennzeichnet, dass** sich die dritte Kammer (33) etwa über das untere Drittel der Höhe erstreckt.

8. Verdampfer (1, 20, 30) nach einem der Ansprüche 1 bis 7, **dadurch gekennzeichnet, dass** die Kammer (8) zwischen einer ersten flachen Stahltafel (9) und einer zweiten, mit Rand versehenen Stahltafel (1) ausgebildet ist, die an der ersten Tafel (9) befestigt ist.

9. Verdampfer (1, 20, 30) nach einem der Ansprüche 1 bis 7, **dadurch gekennzeichnet, dass** das plattenförmige Element (5) drei Aluminiumschichten (22, 23, 24), eine innere Schicht (22) und zwei äußere Schichten (23, 24), umfasst, die durch Walzen miteinander verschweißt werden, und dass die Rohrschlange (6) durch Aufweitung zwischen der inneren Schicht 22 und einer äußeren Schicht (24) ausgebildet wird und die Kammer (8, 31, 32, 33) durch Aufweitung zwischen der inneren Schicht (22) und der anderen äußeren Schicht (23) ausgebildet wird.

## Revendications

1. Evaporateur (1, 20, 30) pour un réfrigérateur (2) du type comprenant un élément en forme de plaque (5) d'une hauteur prédéterminée (H) et un serpentin (6) pour un fluide réfrigérant réparti uniformément sur toute la surface dudit élément en forme de plaque (5), **caractérisé en ce qu'**il comprend un moyen de capacité calorifique (7) réparti au moins dans la région d'une partie supérieure dudit élément en forme de plaque (5) de sorte que ladite région offre une capacité calorifique supérieure à la capacité calorifique de la partie restante dudit élément en forme de plaque (5).

2. Evaporateur (1, 20, 30) selon la revendication 1, **caractérisé en ce que** le moyen de capacité calorifique (7) comprend une chambre (8, 31) pour une substance ayant une capacité calorifique élevée prédéterminée, l'étendue de la chambre étant limitée à une partie supérieure de l'élément en forme de plaque (5).

3. Evaporateur (1, 20) selon la revendication 2, **caractérisé en ce que** la chambre (8) s'étend sur approximativement la moitié supérieure de la hauteur.

4. Evaporateur (30) selon la revendication 2, **caractérisé en ce qu'**il comprend une seconde chambre (32) pour une substance ayant une capacité calorifique inférieure à celle de la substance de la première chambre (31), la seconde chambre (32) s'étendant sur une partie intermédiaire de l'élément en forme de plaque.

5. Evaporateur (30) selon la revendication 4, **caractérisé en ce que** chacune de la première chambre (31) et de la seconde chambre (32) s'étend sur approximativement un tiers de la hauteur, c'est-à-dire un tiers supérieur et un tiers intermédiaire de la hauteur, respectivement.

6. Evaporateur (30) selon la revendication 4, **caractérisé en ce qu'**il comprend une troisième chambre (33) pour une substance ayant une capacité calorifique inférieure à celle des substances de la première chambre (31) et de la seconde chambre (32), la troisième chambre (33) s'étendant en dessous de la seconde chambre (32).

7. Evaporateur (30) selon la revendication 6, **caractérisé en ce que** la troisième chambre (33) s'étend sur approximativement le tiers inférieur de la hauteur.

8. Evaporateur (1, 20, 30) selon l'une quelconque des revendications 1 à 7, **caractérisé en ce que** la chambre (8) est formée entre une première tôle d'acier plate (9) et une seconde tôle d'acier à rebord (11) fixée à la première tôle (9).

9. Evaporateur (1, 20, 30) selon l'une quelconque des revendications 1 à 7, **caractérisé en ce que** l'élément en forme de plaque (5) comprend trois couches d'aluminium (22, 23, 24) une couche interne (22) et deux couches extérieures (23, 24), soudées ensemble par roulage, et **en ce que** le serpentin (6) est formé par expansion entre la couche interne (22) et une couche extérieure (24), et la chambre (8, 31, 32, 33) est formée par expansion entre la couche interne (22) et l'autre couche extérieure (23).
